# EUROPEAN PATENT APPLICATION

(11) **EP 2 244 474 A2**
(43) Date of publication of application: **27.10.2010**
(21) Application number: 10154285.0
(22) Date of filing: 22.02.2010
(51) Int. Cl.: H04N 5/46, H04N 5/57

(54) **Method for setting display apparatus and display apparatus using the same**

(30) Priority: 23.04.2009 KR 20090035483
(71) Applicant: SAMSUNG ELECTRONICS CO., LTD., Suwon-si Gyeonggi-do 442-742 (KR)
(72) Inventor: Lee, Joo-won, Gyeonggi-do (KR)
(74) Representative: Davies, Robert Ean

(57) **Abstract**

A display apparatus and a setting method thereof are provided. The method for setting a display apparatus includes displaying at least one item corresponding to a characteristic of an input image, a value for each of the at least one setting item, and at least one element which denotes a command to apply each of the value, and applying the value for an item corresponding to the selected element if one of the at least one element is selected. Therefore, a user may easily apply to a display a value appropriate for a characteristic of an input image.

## Description

### CROSS-REFERENCE TO RELATED APPLICATIONS

This application claims priority under 35 U.S.C. § 119 from Korean Patent Application No. 10-2009-0035483, filed on April 23, 2009, in the Korean Intellectual Property Office, the disclosure of which is incorporated herein by reference in its entirety.

### BACKGROUND

### 1. Field

Apparatuses and methods consistent with the inventive concept relate to setting a display apparatus, and more particularly, to setting a display apparatus by recommending and applying a value according to characteristics of an input image.

### 2. Description of the Related Art

Recently, various types of image display media have been developed and accordingly, images have been provided in various formats according to content or displaying environment.

Television (TV) needs to apply different setting values according to a characteristic of an image in order to provide appropriate functions for such various images.

However, since users are not familiar with the image display technology, it is difficult for the users to know a setting value appropriate for a particular characteristic of an image. Therefore, a method for more easily applying a setting value appropriate for a characteristic of an input image is needed.

### SUMMARY

Exemplary embodiments of the present invention address at least the above problems and/or disadvantages and other disadvantages not described above. Also, exemplary embodiments are not required to overcome the disadvantages described above and problems described above.

One or more exemplary embodiments provide a method for setting a display apparatus and a display apparatus using the same, in which at least one item corresponding to a characteristic of an input image, a value for each of the at least one displayed item, and at least one element which denotes a command to apply the value, are displayed on a screen of the display apparatus, and if one of the elements is selected, a value for the item corresponding to the selected element is applied to the screen.

According to an aspect of an exemplary embodiment, there is provided a method for setting a display apparatus, including displaying at least one item corresponding to a characteristic of an input image, a value for each of the at least one setting item, and at least one element which denotes a command to apply the value; and if one of the elements is selected, applying the value for the item corresponding to the selected element.

The displaying may include displaying only one setting value for a single setting item.

The at least one item may include a setting item regarding a brightness level characteristic of an input image, a setting item regarding sequence information of an original source of an input image, a setting item regarding a frequency characteristic of an input image, and a setting item regarding gamut information of an input image.

A value for a setting item regarding a brightness level characteristic of an input image may be a recommended setting value for a range of a High-Definition Multimedia Interface (HDMI) Black level, where the method for setting a display apparatus may further include if the input image is a computer image, selecting a recommended setting value for the HDMI Black level as a first range; if the input image is a video image, determining whether the HDMI Black level of the input image exceeds a second range for a predetermined time; if the HDMI Black level of the input image exceeds the second range, selecting a recommended setting value for the HDMI Black level as the first range; and if the HDMI Black level of the input image is within the second range, selecting a recommended setting value for the HDMI Black level as the second range, and where the displaying may include displaying the selected first or second range on a screen as a recommended setting value for the HDMI Black level of the input image.

A recommended setting value for sequence information of an original source of an input image may be one of a 2:2 film image, a 3:2 film image, and a mixed image, where the method for setting a display apparatus may further include determining a format of an original source of an input image from a 2:2 film image format, a 3:2 film image format, and a mixed image format, and where the displaying may include displaying on a screen a recommended setting value corresponding to the determined format of the input image, from a 2:2 film image format, a 3:2 film image format, and a mixed image format.

A recommended setting value for a setting item regarding a frequency characteristic of an input image may be whether a function of data rate control (DRC) or super resolution is a first mode or a second mode, where the method for setting a display apparatus may further include determining whether the DRC or the super resolution is the first mode or the second mode according to a frequency magnitude of a single frame image of the input image, where the first mode may be applied to an input image which is converted from a Standard Definition (SD) into a High Definition (HD), and the second mode may be applied to an input image of which an original image is an HD image, and where the displaying may include displaying the determined first or second mode on a screen as a recommended setting value.

A recommended setting value for a setting item regarding gamut information of an input image may be whether an input image has a gamut of xvYCC format or a gamut of sRGB format, where the method for setting a display apparatus may further include determining whether a gamut of the input image is in xvYCC format or in sRGB format, and where the displaying may include displaying on a screen a recommended setting value corresponding to the determined gamut of an input image, from the xvYCC format or the sRGB format.

The method may further include displaying on a screen a batch application icon which denotes a command to apply, at substantially same time, values for the at least two setting items displayed on the screen.

According to aspect of another exemplary embodiment, there is provided a display apparatus, including a display unit which displays at least one item corresponding to a characteristic of an input image, a value for each of the at least one item, and at least one element which denotes a command to apply each of the value; and a controller which applies a value for an item corresponding to a selected element if one of the at least one element is selected.

The display unit may display only one value for a single item.

The at least one item may include a setting item regarding a brightness level characteristic of an input image, a setting item regarding sequence information of an original source of an input image, a setting item regarding a frequency characteristic of an input image, and a setting item regarding gamut information of an input image.

A recommended setting value for a setting item regarding a brightness level characteristic of an input image may be a recommended setting value for a range of an HDMI Black level, where the controller may select a recommended setting value for the HDMI Black level as a first range if the input image is a computer image; determine whether the HDMI Black level of the input image exceeds a second range for a predetermined period of time if the input image is a video image; select a recommended setting value for the HDMI Black level as the first range if the HDMI Black level of the input image exceeds the second range; and select a recommended setting value for the HDMI Black level as the second range if the HDMI Black level of the input image is within the second range, and where the display unit may display on the screen the selected first or second range as a recommended setting value for the HDMI Black level of the input image.

A recommended setting value for sequence information of an original source of an input image may be one of a 2:2 film image, a 3:2 film image, and a mixed image, where the controller may determine a format of an original source of an input image from a 2:2 film image, a 3:2 film image, and a mixed image, and where the display unit may display on a screen a recommended setting value corresponding to the determined format of the input image selected from a 2:2 film image format, a 3:2 film image format, and a mixed image.

A recommended setting value for a setting item regarding a frequency characteristic of an input image may be whether a function of DRC or super resolution is a first mode or a second mode, where the controller may determine whether the DRC or the super resolution is the first mode or the second mode according to a frequency magnitude of a single frame image of the input image, where the first mode may be applied to an input image which is converted from an Standard Definition (SD) into an HD, and the second mode may be applied to an input image which is an HD image, and where the display unit may display on a screen the determined first or second mode as a recommended setting value.

A recommended setting value for a setting item regarding gamut information of an input image may be whether an input image has a gamut of xvYCC format or a gamut of sRGB format, where the controller may determine whether a gamut of the input image may be in xvYCC format or in sRGB format, and where the display unit may display on a screen a recommended setting value corresponding to the determined gamut of an input image selected from the xvYCC format or the sRGB format.

The display unit may display on a screen a batch application icon which denotes a command to apply at substantially same time values for at least two setting items displayed on the screen,.

### BRIEF DESCRIPTION OF THE DRAWINGS

The above and/or other aspects of the exemplary embodiments will be more apparent from the following detailed description with reference to the accompanying drawings, in which:

FIG. 1 is a block diagram illustrating a display apparatus according to an exemplary embodiment;

FIG. 2 is a flowchart explaining a method for setting a display apparatus according to an exemplary embodiment;

FIG. 3 is a flowchart explaining a method for determining a recommended setting value for a brightness level characteristic of an input image according to an exemplary embodiment;

FIG. 4 is a flowchart explaining a method for deciding a recommended setting value for sequence information of an original source of an input image according to an exemplary embodiment;

FIG. 5 is a flowchart explaining a method for deciding a recommended setting value for a frequency characteristic of an input image according to an exemplary embodiment;

FIG. 6 is a flowchart explaining a method for deciding a recommended setting value for gamut information of an input image according to an exemplary embodiment; and

FIG. 7 is a view illustrating a screen on which a recommended setting window is displayed according to an exemplary embodiment.

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the inventive concept with unnecessary detail.

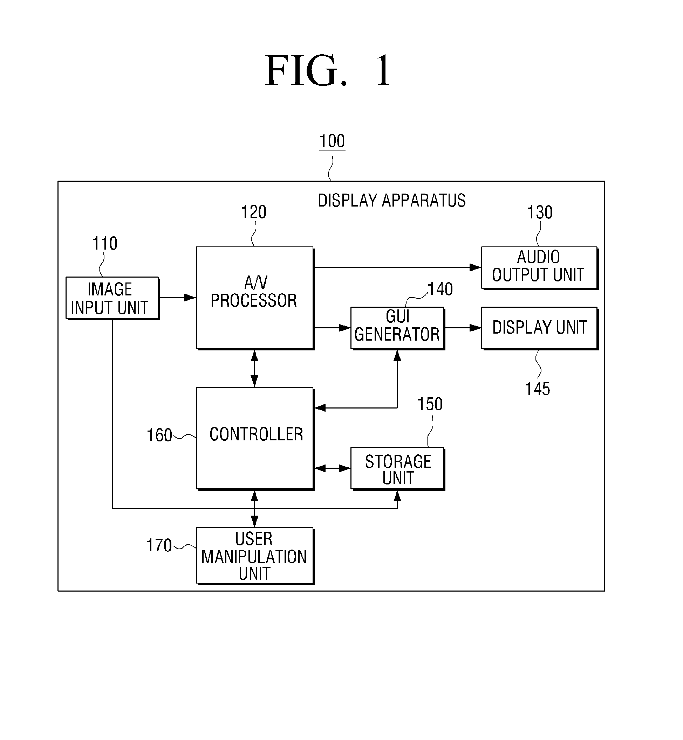

FIG. 1 is a block diagram illustrating a display apparatus 100 according to an exemplary embodiment. Referring to FIG. 1, the display apparatus 100 comprises an image input unit 110, an audio/video (A/V) processor 120, an audio output unit 130, a graphical user interface (GUI) generator 140, a display unit 145, a storage unit 150, a controller 160, and a user manipulation unit 170.

The image input unit 110 receives image data having various characteristics. Herein, the characteristics of an input image represent a characteristic which is decided by an image format itself. For example, the characteristic of an input image may include a brightness level characteristic of an input image, sequence information of an original source of an input image, a frequency characteristic of an input image, or gamut information of an input image.

The brightness level characteristic of an input image is a characteristic regarding a range of brightness of an input image. Specifically, if a red, green, blue (RGB) image is input through an HDMI, a brightness level characteristic of the input image may be related to a range of an HDMI Black level. The HDMI Black level may include a first level range and a second level range. The first level of the HDMI Black level ranges from 0 to 255, and the second level of the HDMI Black level ranges from 16 to 235.

The sequence information of an original source of an input image represents a characteristic regarding the type of sequence of an original image. Specifically, the sequence information of an original source of an input image may be one of a 2:2 film image, a 3:2 film image, and a mixed image. The 2:2 film image is an image which is processed by a 2-2 pull-down procedure, the 3:2 film image is an image which is processed by a 3-2 pull-down procedure, and the mixed image is an image which is generated by combining a video image and a film image.

The frequency characteristic of an input image represents whether an input image is converted from a Standard Definition (SD) into a High Definition (HD) or an original image is an HD image. The frequency characteristic of an input image indicates a frequency magnitude of a single frame image of the input image, and thus a data rate control (DRC) or a super resolution may be one of a first mode or a second mode. For example, if a single frame image of an input image has a frequency magnitude of approximately 6 MHz, the input image may be an image which is converted from an SD image into an HD image, and in this situation, the DRC or the super resolution may be the first mode. On the other hand, if a single frame image of an input image has a frequency magnitude of approximately 74 MHz, an original image of the input image may be an HD image, and in this situation, the DRC or the super resolution may be the second mode.

The gamut information of an input image represents an input image characteristic indicating whether the image input through an HDMI has a gamut of xvYCC format or a gamut of sRGB format. If a gamut of an input image is in xvYCC, the brightness level of the input image may range from 0 to 255, and if a gamut of an input image is in sRGB format, the brightness level of the input image may range from 16 to 235.

As described above, the image input unit 110 receives image data having various characteristics. The image input unit 110 may receive an image in various formats. For example, the image input unit 110 may be implemented as one of HDMI, component, composite, S-video, and digital visual interface (DVI). The image input unit 110 may include a tuner which receives an image over a broadcasting signal. The image input unit 110 may also receive an image through recording media such as a compact disk (CD), a digital versatile disk (DVD), and a Blu-ray disk.

The A/V processor 120 performs signal processing on an image signal and an audio signal which are received from the image input unit 110. The signal processing may include video decoding, video scaling, audio decoding, and so on. The A/V processor 120 outputs the processed image signal to the GUI generator 140, and outputs the processed audio signal to the audio output unit 130. If the received image and audio signals are stored in the storage unit 150, the A/V processor 120 stores an image and an audio in the storage unit 150 in a compressed format.

The A/V processor 120 processes an image so that a setting value for characteristics of an input image is applied to the image. Specifically, the A/V processor 120 applies setting values for an HDMI Black level, sequence information of an input image, DRC or super resolution, and gamut information to an input image, and processes the image.

The audio output unit 130 outputs an audio output from the A/V processor 120 through a speaker or an audio output terminal connected to an external speaker.

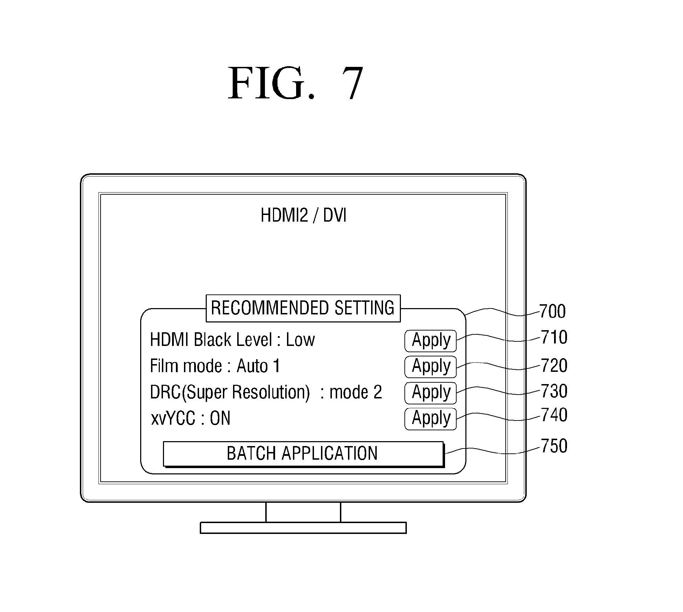

The GUI generator 140 generates a GUI to be provided to a user. The GUI generated by the GUI generator 140 may be displayed on a screen as an on-screen display (OSD) menu. Specifically, the GUI generator 140 generates a GUI regarding a recommended setting window 700 as illustrated in FIG. 7. The recommended setting window 700 will be explained later in detail with reference to FIG. 7.

The display unit 145 displays an image output from the A/V processor 120. The display unit 145 displays an image together with the GUI generated by the GUI generator 140 which is included in the form of an OSD.

Specifically, the display unit 145 displays the recommended setting window 700 which contains at least one setting item corresponding to a characteristic of an input image, a recommended setting value for each of the at least one setting item, and at least one application icon for inputting a command to apply each recommended setting value, on a screen. The display unit 145 displays only one recommended setting value for one setting item. Accordingly, a user may easily know a currently recommended setting value for a setting item without any confusion.

Herein, the setting item represents items for setting configuration of a display apparatus, which is decided according to a characteristic of an input image. For example, the setting item includes a brightness level characteristic of an input image, sequence information of an original source of an input image, a frequency characteristic of an input image, and gamut information of an input image.

The recommended setting value means a setting value which may be considered most appropriate for an input image for the particular setting item, and the appropriate setting value is output from the controller 160 to the GUI generator 140. The controller 160 outputs one recommended setting value for each setting item.

The application icon is provided to allow a user to input a command to apply the recommended setting value for each setting item to a current screen. Accordingly, a user may select a desired application icon corresponding to a recommended setting value using the user manipulation unit 170 in order to apply the recommended setting value to the screen.

Specifically, the display unit 145 displays a brightness level characteristic of an input image, sequence information of an original source of an input image, a frequency characteristic of an input image, and gamut information of an input image, as recommended setting items. The display unit 145 displays one setting value and one application icon for each setting item.

The display unit 145 may also display a batch application icon for receiving a command to apply all of the recommended setting values at once in a recommended setting window.

The storage unit 150 records multimedia content received from the image input unit 110, and stores the received multimedia content. The storage unit 150 may store a multimedia content file received through the network interface.

The user manipulation unit 170 receives an input from a user and transmits the user's input to the controller 160. Specifically, the user manipulation unit 170 receives a command to select an application icon for a recommended setting value from a user. The user manipulation unit 170 may be buttons disposed on the display apparatus 100, a touch screen, or a remote controller. That is, separate buttons might be provided for various characteristics of the image. Multiple application icons will correspond to these buttons.

The controller 160 recognizes the user's command based on the user's instruction transmitted from the user manipulation unit 170, and controls overall operations of the display apparatus 100 according to the recognized user's command.

If an application icon is selected, the controller 160 applies a recommended setting value for a setting item corresponding to the selected icon. That is, the controller 160 calculates each recommended setting value for setting item of a brightness level characteristic of an input image, setting item of sequence information of an original source of an input image, setting item of a frequency characteristic of an input image, and setting item of gamut information of an input image. If the application icon is selected to apply the recommended setting value for the setting item, the controller 160 applies the recommended setting value corresponding to the selected icon to the currently displayed screen.

A user may anticipate a point in time in which the setting value is applied to a screen. Accordingly, although a screen flickers when the setting value is applied to the screen, the user may recognize that the flickering occurs due to the application of the setting value, and that it is not a problem of a display apparatus.

If a batch application icon is selected through the user manipulation unit 170, the controller 160 applies all of the recommended setting values for the items displayed on the screen at once or at substantially same time to the currently displayed screen. That is, after the flickering of the screen, the display will display the image with all of the recommended values being applied thereto.

The controller 160 sets a range of a HDMI Black level to be a recommended setting value for a setting item regarding a brightness level characteristic of an input image.

If an input image is a computer image, the controller 160 selects the recommended setting value regarding a range of an HDMI Black level as the first range.

On the other hand, if an input image is a video image, the controller 160 determines whether or not an HDMI Black level of the input image goes beyond the second range for a predetermined time. If an HDMI Black level of the input image goes beyond the second range within a predetermined time, the controller 160 selects a recommended setting value regarding an HDMI Black level as the first range. On the other hand, if an HDMI Black level of the input image does not go beyond the second range for a predetermined time, the controller 160 selects a recommended setting value regarding an HDMI Black level as the second range.

The controller 160 controls the display unit 145 to display the selected first or second range on the screen as a recommended setting value regarding an HDMI Black level. The first range represents an HDMI Black level ranging from 0 to 255, and the second range represents an HDMI Black level ranging from 16 to 235.

Regarding a recommended setting value for sequence information of an original source of an input image, the controller 160 determines a format of an input image among a 2:2 film image, a 3:2 film image, and a mixed image. The controller 160 controls the display unit 145 to display a recommended setting value corresponding to the determined format of an input image on a screen.

Regarding a setting item representing a frequency characteristic of an input image, the controller 160 determines whether the DRC or the super resolution is the first mode or the second mode according to a frequency magnitude of a single frame image included in the input image.

Specifically, if a frequency magnitude of the single frame image of the input image is approximately 6 MHz, the controller 160 sets a recommended setting value so that the DRC or the super resolution becomes the first mode. On the other hand, if a frequency magnitude of the single frame image of the input image is approximately 74 MHz, the controller 160 sets a recommended setting value so that the DRC or the super resolution becomes the second mode.

The controller 160 controls the display unit 145 to display whether the DRC or the super resolution is the first mode or the second mode on a screen as a recommended setting value.

Regarding gamut information of an input image, the controller 160 determines whether an input image has a gamut of xvYCC format or a gamut of sRGB format. In more detail, the controller 160 extracts gamut information from an extended display identification data (EDID) of an input image, and determines the format of gamut of an input image. The controller 160 may determine the format of gamut of an input image by detecting that a brightness level of the input image ranges from 0 to 16 or from 235 to 255 since a brightness level of an sRGB image ranges from 16 to 235, and a brightness level of an xvYCC image ranges from 0 to 255.

The controller 160 controls the display unit 145 to display a recommended setting value corresponding to the gamut of the input image, that is xvYCC image or sRGB image.

As described above, the display apparatus 100 displays recommended setting values appropriate for the input image and thus a user may easily and appropriately set the image. The setting value is applied to the screen only when a user selects the corresponding application icon. Accordingly, a user may easily recognize that the problem such as flickering occurring on a screen when a setting value is applied to the screen is not caused by a problem with a display apparatus.

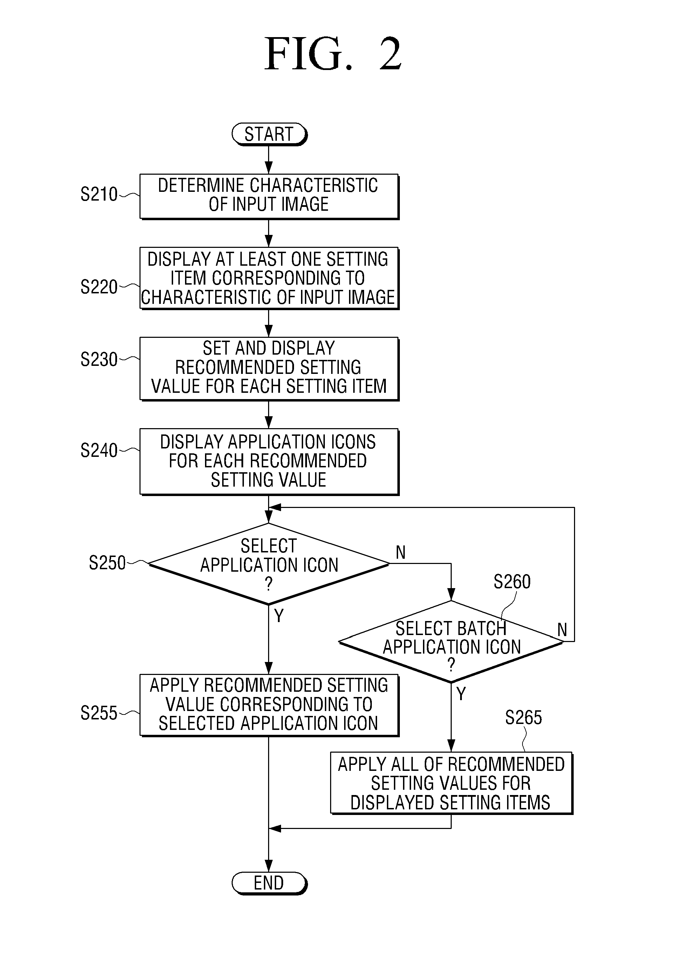

Hereinbelow, an exemplary method of setting the display apparatus 100 will be explained in detail with reference to FIGS. 2 to 6. FIG. 2 is a flowchart explaining a method for setting the display apparatus 100 according to an exemplary embodiment.

The display apparatus 100 determines a characteristic of an input image (S210). The characteristic of an input image represents a characteristic which is decided by an image format itself. For example, the characteristic of an input image may include one or more of a brightness level characteristic of an input image, sequence information of an original source of an input image, a frequency characteristic of an input image, or gamut information of an input image. The display apparatus 100 automatically determines the characteristics of the incoming/input image using the image and information provided with the image.

The display apparatus 100 displays at least one setting item corresponding to a characteristic of an input image (S220). Herein, the setting item represents one or more items for setting environment of a display apparatus, which is decided according to a characteristic of an input image. For example, the setting item includes a brightness level characteristic of an input image, sequence information of an original source of an input image, a frequency characteristic of an input image, and gamut information of an input image.

The display apparatus 100 determines and displays a recommended setting value for each setting item (S230). The recommended setting value means a setting value which may be considered most appropriate for an input image, and the appropriate setting value is calculated by the controller 160 of the display apparatus 100. The display apparatus 100 calculates each recommended setting value for each setting item. The display apparatus 100 displays only one recommended setting value for a single setting item. Accordingly, a user may easily know currently recommended setting value without any confusion.

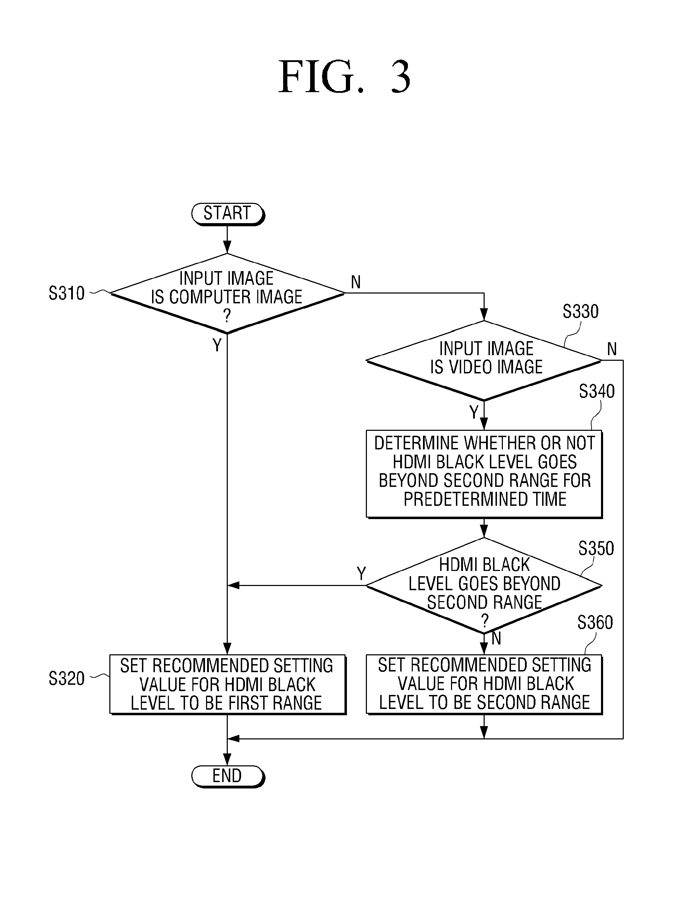

The exemplary process of calculating a recommended setting value will be explained in detail with reference to FIGS. 3 to 6. FIG. 3 is a flowchart explaining a method of deciding a recommended value for a brightness level characteristic of an input image according to an exemplary embodiment of the present invention. In this exemplary embodiment, the brightness level characteristic of an input image is an HDMI Black level.

The display apparatus 100 determines whether or not an input image is a computer image (S310). If the input image is a computer image (S310-Y), the display apparatus 100 sets a recommended setting value of an HDMI Black level of the input image as a first range (S320). The first range may represent the entire range of an HDMI Black level, and for example the first range represents an HDMI Black level ranging from 0 to 255.

On the other hand, if the input image is not a computer image (S310-N), the display apparatus 100 determines whether or not the input image is a video image (S330). If the input image is a video image (S330-Y), the display apparatus 100 determines whether or not an HDMI Black level of the input image goes beyond the second range for a predetermined time (S340). Herein, the second range may represent a partial range of an HDMI Black level, and for example the second range represents an HDMI Black level ranging from 16 to 235.

If an HDMI Black level of the input image goes beyond the second range for a predetermined time (S350-Y), the display apparatus 100 sets a recommended setting value for an HDMI Black level of the input image to be the first range (S320). On the other hand, if an HDMI Black level of the input image does not go beyond the second range for a predetermined time (S350-N), the display apparatus sets a recommended setting value for an HDMI Black level of the input image to be the second range (S360).

By doing so, the display apparatus 100 decides a recommended setting value for an HDMI Black level of an input image.

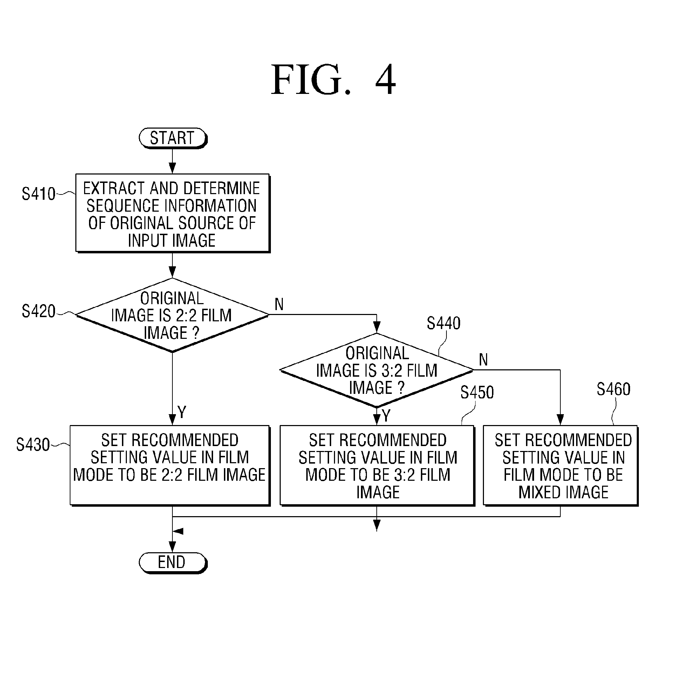

Hereinbelow, an exemplary method in which the display apparatus 100 decides a recommended setting value for sequence information of an original source of an input image will be explained with reference to FIG. 4. FIG. 4 is a flowchart explaining a method of deciding a recommended setting value for sequence information of an original source of an input image according to an exemplary embodiment.

The display apparatus 100 extracts sequence information of an original source of an input image, and determines a format of an original image (S410). If the original image is a 2:2 film image (S420-Y), the display apparatus 100 sets a recommended setting value in a film mode to be a 2:2 film image (S430). On the other hand, if the original image is not a 2:2 film image (S420-N), the display apparatus 100 checks whether the original image is a 3:2 film image (S440). If the original image is a 3:2 film image (S440-Y), the display apparatus 100 sets a recommended setting value in a film mode to be a 3:2 film image (S450). If an original image is neither a 2:2 film image (S420-N) nor a 3:2 film image (S440-N), the display apparatus 100 sets a recommended setting value in a film mode to be a mixed image (S460).

Using the above exemplary process, the display apparatus 100 decides a recommended setting value for sequence information of an original source of an input image.

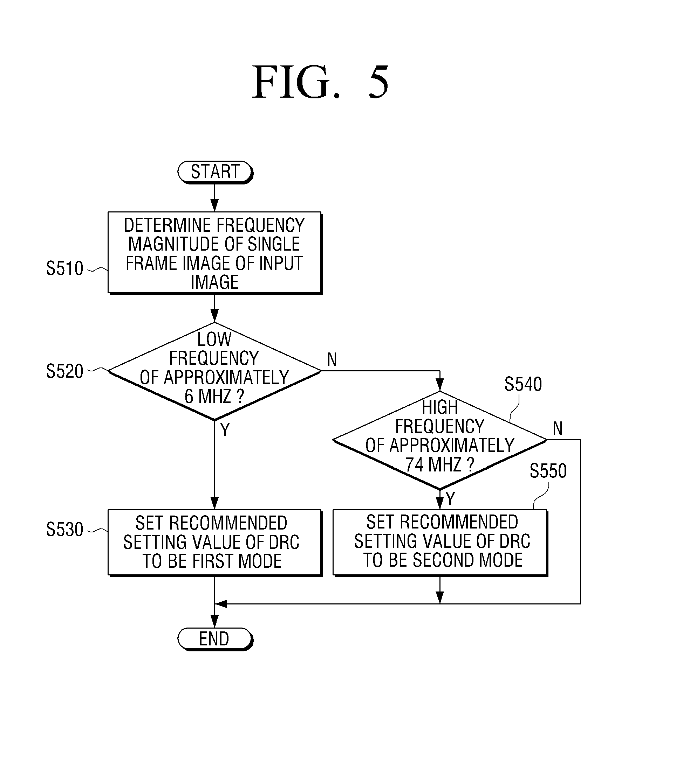

Hereinbelow, an exemplary method in which the display apparatus 100 decides a recommended setting value for a frequency characteristic of an input image will be explained with reference to FIG. 5. FIG. 5 is a flowchart explaining a method for deciding a recommended setting value for a frequency characteristic of an input image according to an exemplary embodiment.

The display apparatus 100 determines a frequency magnitude of a single frame image of an input image (S510). If a single frame image of an input image has a low frequency of approximately 6 MHz (S520-Y), the display apparatus 100 sets a recommended setting value of the DRC or the super resolution to be the first mode (S530). On the other hand, if a single frame image of an input image does not have a low frequency of approximately 6 MHz (S520-N), the display apparatus 100 checks whether the single frame image has a high frequency (S540). If the single frame image has a high frequency of approximately 74 MHz (S540-Y), the display apparatus 100 sets a recommended setting value of the DRC or the super resolution to be the second mode (S550).

Using the above exemplary process, the display apparatus 100 decides a recommended setting value of a frequency characteristic of an input image.

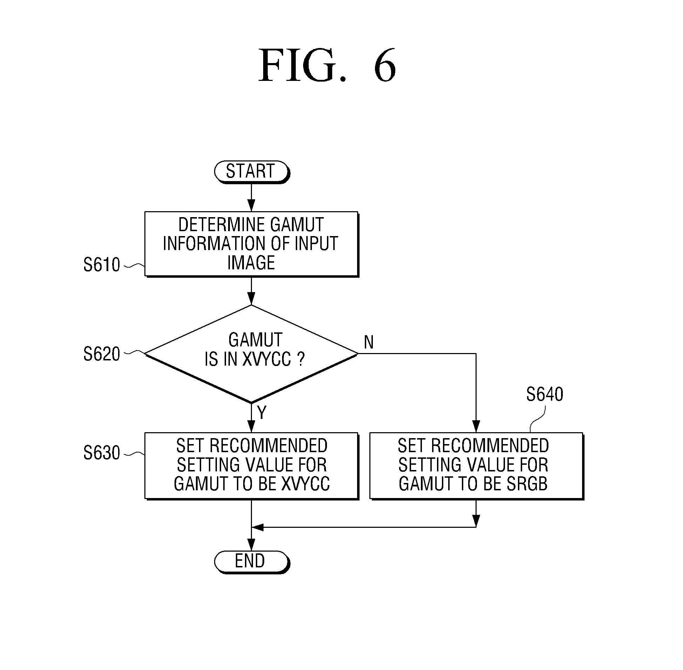

Hereinbelow, an exemplary method in which the display apparatus 100 decides a recommended setting value for gamut information of an input image will be explained with reference to FIG. 6. FIG. 6 is a flowchart explaining a method of deciding a recommended setting value for gamut information of an input image according to an exemplary embodiment.

The display apparatus 100 determines gamut information of an input image (S610). In more detail, the display apparatus 100 extracts gamut information from extended display identification data (EDID) information provided with an input image, and determines the format of gamut of the input image. The display apparatus 100 may determine the format of gamut of an input image by detecting that a brightness level of the input image ranges from 0 to 16 or from 235 to 255, since a brightness level of an sRGB image ranges from 16 to 235, and a brightness level of an xvYCC image ranges from 0 to 255.

If a gamut of an input image is in xvYCC (S620-Y), the display apparatus 100 sets a recommended setting value for gamut of the input image to be xvYCC (S630). If a gamut of an input image is not in xvYCC (S620-N), the display apparatus 100 sets a recommended setting value for gamut of the input image to be sRGB (S640).

Using the above exemplary process, the display apparatus 100 decides a recommended setting value for gamut information of an input image.

The display apparatus 100 decides recommended setting values for each setting item as explained above with reference to FIGS. 3 to 6, and displays the set recommended setting values on the screen.

Referring back to FIG. 2, the display apparatus 100 displays an application icon for each recommended setting value (S240). An example of a screen in which recommended setting values and application icons are displayed is illustrated in FIG. 7.

Hereinbelow, an exemplary screen with a recommended setting window will be explained in detail with reference to FIG. 7. FIG. 7 is a view illustrating a screen in which a recommended setting value is displayed according to an exemplary embodiment of the present invention. Referring to FIG. 7, four exemplary items "HDMI Black level," "Film mode," "DRC (Super Resolution)," and "xvYCC" are displayed in a recommended setting window 700. Recommended setting values "Low," "Auto 1," "mode 2," and "ON" are displayed for each setting item.

In this exemplary embodiment, "Low" for "HDMI Black level" represents a recommended setting value of an HDMI Black level belonging to the second range as explained in detail above with reference to FIG. 3. "Auto 1" for "Film Mode" represents a recommended setting value when sequence information of an original source of an input image corresponds a 2:2 film image. "Mode 2" for "DRC (Super Resolution)" represents a recommended setting value for DRC or super resolution set to be the second mode. "ON" for "xvYCC" represents a recommended setting value for gamut of an input image set to be xvYCC.

A first application icon 710, a second application icon 720, a third application icon 730, and a fourth application icon 740 are displayed for each setting item. For example, if a user selects the first application icon 710, the display apparatus 100 applies an HDMI Black level to a currently displayed screen so that it becomes in the second range.

Referring to FIG. 7, a batch application icon 750 is displayed in the recommended setting window 700 so that all the recommended values determined and set by the display apparatus 100 are applied to the currently displayed screen.

Referring back to FIG. 2, if a user selects one of the first to fourth application icons 710 to 740 (S250-Y), the display apparatus 100 applies a recommended setting value corresponding to the selected application icon to the currently displayed screen (S255).

If the user does not select a particular application icon (S250-N) but instead selects the batch application icon 750 (S260-Y), the display apparatus 100 applies all of the recommended setting values for the displayed setting items (S265). On the other hand, if none of the icons are selected (S260-N), the display apparatus 100 continues to await user input.

The display apparatus 100 displays a recommended setting value according to a characteristic of an input image, and applies the setting value according to user's instruction using the above exemplary process. The display apparatus 100 displays a recommended setting value appropriate for an input image, and thus allows a user to easily and appropriately set the optimum display for the image. The setting recommended value is applied only when a user selects an application icon and not automatically in an exemplary embodiment of the present invention. Although automatically applying the recommended values determined and set by a display apparatus is possible, since the user has to initiate a change in settings, the user may easily recognize that a display apparatus is not experiencing problems even when problems such as interference appears on a screen of the display apparatus as a result of applying recommended values.

The display apparatus according to an exemplary embodiment of the present invention may be any apparatus which displays an input image on a screen. For example, the display apparatus may be a TV, a monitor, and a projector. In the exemplary display apparatus a storage unit is a tangible memory and the controller and the a/v processor comprises of a combination of software and hardware.

According to various exemplary embodiments of the present invention, an exemplary display apparatus and a method for setting a display apparatus are provided, in which at least one setting item corresponding to a characteristic of an input image, a recommended setting value for the at least one setting item, and at least one application icon to receive a command to apply each of the recommended setting values are displayed on a screen, and if at least one application icon is selected, a recommended value for a item corresponding to the selected icon is applied. Accordingly, a user may easily apply a setting recommended value appropriate for a characteristic of an input image.

Since a setting value is applied when a user selects an application icon, a user may easily recognize that the display apparatus does not have any a problem but is changing a setting value of a item although a screen of the display apparatus flickers or an image is abnormally displayed on the screen.

The foregoing exemplary embodiments and advantages are merely exemplary and are not to be construed as limiting the claimed invention. The present teaching can be readily applied to other types of apparatuses. Many alternatives, modifications, and variations will be apparent to those skilled in the art.

## Claims

1. A method for setting a display apparatus, comprising:
displaying at least one setting item corresponding to a characteristic of an input image, a recommended setting value for each of the at least one setting item, and at least one application icon which denotes a command to apply the recommended setting value; and
if one of the at least one application icon is selected, applying a recommended setting value for a setting item corresponding to the selected icon.

2. The method as claimed in claim 1, wherein the displaying comprises:
displaying only one recommended setting value for a single setting item.

3. The method as claimed in claim 1 or 2, wherein the at least one settng item comprises a setting item regarding a brightness level characteristic of the input image, a setting item regarding sequence information of an original source of the input image, a setting item regarding a frequency characteristic of the input image, and a setting item regarding gamut information of the input image.

4. The method as claimed in claim 3, wherein the recommended setting value for the setting item regarding a brightness level characteristic of the input image is a recommended setting value for a range of a High-Definition Multimedia Interface (HDMI) Black level,
wherein the method for setting the display apparatus further comprises:
if the input image is a computer image, selecting the recommended setting value for the HDMI Black level to be a first range;
if the input image is a video image, determining whether or not the HDMI Black level of the input image exceeds a second range for a predetermined period of time;
if the HDMI Black level of the input image exceeds the second range, selecting the recommended setting value for the HDMI Black level to be the first range; and
if the HDMI Black level of the input image is within the second range, selecting the recommended setting value for the HDMI Black level to be the second range, and
wherein the displaying comprises:
displaying on the screen the selected first or second range as the recommended setting value for the HDMI Black level of the input image.

5. The method as claimed in claim 3 or 4, wherein the recommended setting value for the sequence information of the original source of the input image is one of a 2:2 film image, a 3:2 film image, and a mixed image,
wherein the method for setting the display apparatus further comprises:
determining a format of the original source of the input image from the 2:2 film image, the 3:2 film image, and the mixed image, and
wherein the displaying comprises:
displaying on a screen the recommended setting value corresponding to the determined format of the input image selected from the 2:2 film image, the 3:2 film image, and the mixed image.

6. The method as claimed in one of claims 3 to 5, wherein the recommended setting value for the setting item regarding the frequency characteristic of the input image is whether a function of data rate control (DRC) or super resolution is a first mode or a second mode,
wherein the method for setting the display apparatus further comprises:
determining whether the DRC or the super resolution is the first mode or the second mode according to a frequency magnitude of a single frame image of the input image,
wherein the first mode is applied to the input image which is converted from a Standard Definition (SD) into a High Definition (HD), and the second mode is applied to the input image if the input image is an HD image, and
wherein the displaying comprises:
displaying on a screen the determined first or second mode as the recommended setting value.

7. The method as claimed in one of claims 3 to 6, wherein the recommended setting value for the setting item regarding the gamut information of the input image is whether the input image has a gamut of xvYCC format or a gamut of sRGB format,
wherein the method for setting the display apparatus further comprises:
determining whether the gamut of the input image is in the xvYCC format or in the sRGB format, and
wherein the displaying comprises:
displaying on a screen the recommended setting value corresponding to the determined gamut of the input image selected from the xvYCC format and the sRGB format.

8. The method as claimed in one of claims 1 to 7, further comprising:
displaying on a screen a batch application icon which denotes a command to apply at substantially same time at least two recommended setting values displayed on the screen.

9. A display apparatus, comprising:
a display unit which displays at least one setting item corresponding to a characteristic of an input image, a recommended setting value for each of the at least one setting item, and at least one application icon which denotes a command to apply each of the recommended setting value; and
a controller which applies the recommended setting value for a setting item corresponding to a selected icon if one of the at least one application icon is selected.

10. The display apparatus as claimed in claim 9, wherein the display unit displays only one recommended setting value for a single setting item.

11. The display apparatus as claimed in claim 9 or 10, wherein the at least one setting item comprises a setting item regarding a brightness level characteristic of the input image, a setting item regarding sequence information of an original source of the input image, a setting item regarding a frequency characteristic of the input image, and a setting item regarding gamut information of the input image.

12. The display apparatus as claimed in claim 11, wherein the recommended setting value for the setting item regarding the brightness level characteristic of the input image is a recommended setting value for a range of a High-Definition Multimedia Interface (HDMI) Black level,
wherein the controller selects the recommended setting value for the HDMI Black level to be a first range if the input image is a computer image; determines whether the HDMI Black level of the input image exceed a second range for a predetermined period of time if the input image is a video image; selects the recommended setting value for the HDMI Black level to be the first range if the HDMI Black level of the input image exceeds the second range; and selects the recommended setting value for the HDMI Black level to be the second range if the HDMI Black level of the input image is within the second range, and
wherein the display unit displays on a screen the selected first or second range as the recommended setting value for the HDMI Black level of the input image.

13. The display apparatus as claimed in one of claim 11 or 12, wherein the recommended setting value for the sequence information of the original source of the input image is one of a 2:2 film image, a 3:2 film image, and a mixed image,
wherein the controller determines a format of the original source of the input image selected from the 2:2 film image, the 3:2 film image, and the mixed image, and
wherein the display unit displays on a screen the recommended setting value corresponding to the determined format of the input image selected from the 2:2 film image, the 3:2 film image, and the mixed image.

14. The display apparatus as claimed in one of claims 11 to 13, wherein the recommended setting value for the setting item regarding the frequency characteristic of the input image is whether a function of data rate control (DRC) or super resolution is a first mode or a second mode,
wherein the controller determines whether the DRC or the super resolution is the first mode or the second mode according to a frequency magnitude of a single frame image of the input image,
wherein the first mode is applied to the input image which is converted from a Standard Definition (SD) into a High Definition (HD), and the second mode is applied to the input image if the input image is an HD image, and
wherein the display unit displays on the screen the determined first or second mode as the recommended setting value.

15. The display apparatus as claimed in one of claims 11 to 14, wherein the recommended setting value for setting item regarding the gamut information of the input image is whether the input image has a gamut of xvYCC format or a gamut of sRGB format,
wherein the controller determines whether the gamut of the input image is in the xvYCC format or in the sRGB format, and
wherein the display unit displays on the screen the recommended setting value corresponding to the determined gamut of the input image selected from the xvYCC or the sRGB.
